# EUROPÄISCHE PATENTSCHRIFT

(11) **EP 2 427 309 B1**
(45) Veröffentlichungstag und Bekanntmachung des Hinweises auf die Patenterteilung: **19.02.2014**
(21) Anmeldenummer: 10718574.6
(22) Anmeldetag: 04.05.2010
(51) Int. Cl.: B29B 15/12

(54) **VERFAHREN UND VORRICHTUNG ZUR HERSTELLUNG EINES FADENS AUS EINER MEHRZAHL VON EINZELFILAMENTEN**
METHOD AND DEVICE FOR PRODUCING A THREAD MADE OF A PLURALITY OF INDIVIDUAL FILAMENTS
PROCÉDÉ ET DISPOSITIF DE FABRICATION D'UN FIL À PARTIR D'UNE PLURALITÉ DE MONOFILAMENTS

(30) Priorität: 04.05.2009 DE 102009019500; 29.07.2009 DE 102009061031
(43) Veröffentlichungstag der Anmeldung: 14.03.2012
(73) Patentinhaber: Knappe, Faisal H.-J., 97475 Zeil (DE)
(72) Erfinder: Knappe, Faisal H.-J., 97475 Zeil (DE)
(74) Vertreter: Bauer, Dirk
(86) Internationale Anmeldenummer: PCT/EP2010/056038
(87) Internationale Veröffentlichungsnummer: WO 2010/128048

(56) Entgegenhaltungen:
- EP-A1- 1 094 042
- GB-A- 2 012 623
- US-A- 4 419 400

## Beschreibung

### Einleitung

Die Erfindung betrifft ein Verfahren zur Herstellung eines Fadens, der eine Mehrzahl von Einzelfilamenten besitzt. Darüber hinaus betrifft die Erfindung eine Vorrichtung zur Herstellung eines Fadens, der eine Mehrzahl von Einzelfilamenten besitzt.

### Stand der Technik

Verfahren und Vorrichtungen zur Herstellung von aus einer Mehrzahl von Einzelfilamenten bestehenden Fäden (Garnen) sowie derartige Fäden sind in großer Vielzahl allgemein bekannt. Um die Festigkeit und den Zusammenhalt der Einzelfilamente, unter denen im Sinne der vorliegenden Anmeldung Monofilamente zu verstehen sind, im fertigen Faden zu verbessern, insbesondere wenn es sich bei den Einzelfilamenten um Stapelfasern, d.h. Filamente mit relativ kleiner Länge, handelt, werden die Einzelfilamente im Wege eines Spinnverfahrens miteinander verdreht. Alternativ zur Drehung können Einzelfilamente auch unter Verwendung von aushärtenden oder aushärtbaren Harzen quasi miteinander verklebt werden, um einen Verbund mit hinreichendem Zusammenhalt zu erzielen. Es handelt sich bei derartigen Fäden mit Harzanteil um einen Faserverbund-Werkstoff.

Nachteilig bei den bekannten Fäden ist, dass sich daraus im Rahmen einer Weiterverarbeitung hergestellte textile Flächengebilde (Gewebe, Gewirke, Gestricke, Gelege, Vliese, o.ä.) oder wiederum aus diesen textilen Flächengebilden im Zuge weiterer Verarbeitung hergestellte Halbzeuge (Profile, Platten, Leisten, o. ä.) im Hinblick auf ihre statischen und dynamischen Eigenschaften nur sehr schwer berechnen lassen. Insbesondere versagt bei aus Fäden bestehenden Gebilden die Finite-Elemente-Methode (FEM), die in weiten Bereichen der Festkörperstatik mit den großen, heutzutage zur Verfügung stehenden Rechnerkapazitäten eine recht exakte numerische Bestimmung der Belastung in einem Bauteil ermöglicht.

Darüber hinaus liegt ein Nachteil bekannter Verbundwerkstoffe aus Fäden und diese zusammen haltenden Harzen darin, dass der Harzanteil sehr hoch ist. Dies reduziert nicht nur die Festigkeit derartiger Verbundwerkstoffe, sondern erhöht auch die Kosten da die Harze vergleichsweise teuer sind. Darüber hinaus ist die Verwendung großer Mengen von Harzen auch unter Umweltgesichtspunkten bzw. dem Aspekt der Ressourcenschonung kritisch zu betrachten, weil die Harze in den meisten Fällen aus Rohölprodukten hergestellt sind.

In der EP 1 094 042 A1 werden eine Mehrzahl von monofilen Einzelfilamenten in unidirektionaler (paralleler) Ausrichtung, d. h. ohne jegliche Verdrehung, durch ein Harzbad und anschließend eine Düse geführt, um den beim Verlassen der Düse möglichst über seinen gesamten Querschnitt mit Harz gefüllten Faden zu trocknen, ohne dabei eine Vernetzung des Harzes herbeizuführen.

Um dieses zu vermeiden wird in der GB 2 012 623 A eine Vorrichtung sowie ein Verfahren vorgeschlagen, bei der gänzlich auf ein Harzbad verzichtet werden soll. Die Einzelfilamente sollen stattdessen mit dem Harz begossen werden. Damit das Harz an den Einzelfilamenten haftet, sollen diese vorher erhitzt werden. Dieses Dokument offenbart die Oberbegriffe der Ansprüche 1 und 11.

### Aufgabe

Der Erfindung liegt die Aufgabe zugrunde, ein Verfahren und eine Vorrichtung zur Herstellung eines Fadens vorzuschlagen, mit dem bzw. der sich Fäden (Garne) herstellen lassen, die zur Weiterverarbeitung zu textilen Flächengebilden oder unter deren Verwendung hergestellter Halbfabrikate geeignet sind, die sich wiederum durch eine hohe Festigkeit, eine einfache numerische Berechenbarkeit der mechanischen Belastungszustände und durch einen geringen Harzverbrauch auszeichnen.

### Lösung

In verfahrenstechnischer Hinsicht wird die vorgenannte Aufgabe ausgehend von einem Verfahren der eingangs genannten Art dadurch gelöst, dass die Einzelfilamente vorzugsweise jeweils voneinander beabstandet endlos geführt und mit einem fließfähigen, ein Lösungsmittel enthaltenden und durch Einwirkung mindestens einer physikalischen Größe und/oder eines chemischen Stoffs vernetzbaren Harz beschichtet werden, wobei die beschichteten Einzelfilamente anschließend kompaktiert werden, so dass ein aus den Einzelfilamenten und dem diese zusammenhängend umgebenden Harz bestehender und von Gaseinschlüssen freier Verbund gebildet wird, aus dem im folgenden während eines Trocknungsvorgangs das in dem Harz enthaltene Lösungsmittel ausgetrieben wird, wobei der dann als monofiler Faden vorliegende Verbund in einem unvernetzten Zustand des Harzes aufgewickelt wird, wobei alle Einzelfilamente während sämtlicher vorstehender Verfahrensschritte in paralleler (d.h. unidirektionaler) Ausrichtung gehalten werden und ferner die Einzelfilamente vor der Beschichtung mit dem Harz auf eine Temperatur zwischen 50° C bis 80° C aufgewärmt werden.

Die Erfindung geht zunächst von der Erkenntnis aus, dass das Verdrehen der Einzelfilamente eines Fadens, wie es im Stand der Technik standardmäßig und selbstverständlich angewendet wird, dann sehr von Nachteil ist, wenn aus dem gedrehten Faden in weiteren Verarbeitungsschritten ein textiles Flächengebilde (als Bestandteil eines späteren, Harz enthaltenden Verbundwerkstoffs) und daraus eventuell weitere Halbfabrikate unter Zusatz von Harz hergestellt werden sollen. Die Verdrehung der Einzelfilamente ist nämlich bei einem späteren Verbinden einer Mehrzahl von Fäden unter Verwendung eines fließfähigen Harzes zu einem Faserverbundwerkstoff sehr von Nachteil, weil ein Eindringen des Harzes in die zentralen Bereiche um die Längsachse des Fadens herum nahezu ausgeschlossen ist, da die verdrehten Einzelfilamente den inneren Bereich quasi dicht verschließen und vor einem Eindringen des Harzes abschirmen. Hieraus ergibt sich ein Festigkeitsverlust für den Faden, weil dieser in seinem Inneren aufgrund des fehlenden Harzes keinen genügenden Zusammenhalt besitzt.

Dieses Problem wird mit dem erfindungsgemäßen Verfahren durch die Beschichtung bereits der Einzelfilamente und anschließende Kompaktierung gelöst, wodurch ein Verbund erzeugt wird, der über seinen gesamten Querschnitt ausschließlich aus den Einzelfilamenten und dem diese umgebenden Harz besteht. Durch ein geeignetes Kompaktierungsverfahren sind Gaseinschlüsse in dem Querschnitt des Verbunds ausgeschlossen. Bei Fäden, die nach dem erfindungsgemäßen Verfahren hergestellt sind, ist damit - nach einem Vernetzen des Harzes - auch im Inneren des Fadens ein hervorragender Zusammenhalt gegeben, da auch dort die Klebewirkung des Harzes in vollem Umfang eintritt. Die Festigkeit wird somit deutlich gesteigert und die Möglichkeiten, die Belastung numerisch zu bestimmen, verbessert.

Die Erfindung beruht jedoch noch auf der zusätzlichen Erkenntnis, dass bei der Weiterverarbeitung von Fäden zu textilen Flächengebilden oder daraus unter Harzzugabe im Weiteren hergestellten Halbfabrikaten eine Verwendung von Fäden mit ausgehärtetem Harz (ebenso wie die Verwendung gedrehter, aber kein Harz enthaltender Fäden) nicht zielführend ist, sondern eine hervorragende Verbindung der Einzelfilamente in dem textilen Flächengebilde oder den daraus hergestellten Halbfabrikaten dann erzielt wird, wenn die Vernetzung des Harzes erst dann vorgenommen wird, wenn die Fäden in die Form gebracht worden sind, die sie im endgültigen Produkt besitzen sollen. Da die Fäden im unvernetzten Harzzustand erfindungsgemäß noch relativ zueinander bewegliche und parallel zueinander verlaufende Einzelfilamente besitzen, ergibt sich zwischen benachbarten Fäden einer daraus herzustellenden größeren Struktur ein sehr guter Kontakt mit größtmöglichen Kontaktflächen. So ist unter Druck eine sehr weitreichende Abflachung oder Abplattung der Fäden zu erzielen (in Richtung auf einen Rechteckquerschnitt), woraus sich quasiflächige Kontaktflächen zwischen sich z.B. kreuzenden Fäden ergeben. Dies führt wiederum zu einer besonderen Festigkeit des hergestellten Produkts nach Vernetzung des Harzes und senkt aufgrund des hohen Anteils der Einzelfilamente am fertigen Produkt den Verbrauch des Harzes enorm, da die nicht von den Einzelfilamenten ausgefüllten Freiräume drastisch reduziert werden.

Die Erfindung lehrt somit, die Vernetzung des Harzes solange zurückzustellen, bis nach einem oder mehreren weiteren Verfahrensschritten, die sämtlich nach Abschluss der Fadenherstellung erfolgen, die gewünschte Endform der herzustellenden Struktur erreicht um das Bindungspotenzial des Harzes erst dann einzusetzen, wenn damit im fertigen Produkt ein Verbund zwischen einer Mehrzahl von Fäden bzw. der darin enthaltenen Einzelfilamente erzielt werden kann. Mit der Erfindung wird also ein neues Halbfabrikat "Multifilamentfaden mit unvernetztem Harz" (mit unidirektionaler Ausrichtung der Einzelfilamente) geschaffen, bei dem das Harz nach seiner Trocknung die wesentliche Zwischenaufgabe erfüllt, den Einzelfilament-Verbund zu einem handhabbaren Monofilament-Faden zusammenzufügen und während der später folgenden Verarbeitungsschritte in dieser Form zu erhalten. Dies gilt z.B. für das spätere Transportieren, Abwickeln, Verweben, Verstricken, Verwirken oder bei der Vliesherstellung usw. Fäden zu Fertigprodukten oder Halbfabrikaten auf dem Weg zu weiteren Fertigprodukten. Man erhält folglich unter dem Aspekt der Handhabung einen monofilen Faden, der jedoch aufgrund des unvernetzten Harzes vor dem späteren Vernetzungsvorganginsbesondere unter Druckbelastung - unter Verschiebung der Einzelfilamente relativ zueinander verfasst werden kann, wobei die kompaktierte Form nach der Vernetzung als endgültige Form des Fertigprodukts oder des Halbfabrikats erhalten bleibt. Die Trocknung des Harzes (d.h. die Lösungsmittel-Entfernung) muss wenigstens soweit erfolgen, dass die Viskosität des Harzes zum einen den Zusammenhalt der Einzelfilamente sicherstellt, und zum anderen verhindert, dass der aufgewickelte Faden zwischen benachbarten Windungen oder Fäden auf einer Spule verklebt und dann nicht mehr ordnungsgemäß für die weitere Verwendung abspulbar ist. Um das Anhaften des Harzes an den Einzelfilamenten zu verbessern und das Einschleppen von Luft in das Harzbad zu reduzieren, werden die Einzelfilamente vor der Beschichtung mit dem Harz auf eine Temperatur zwischen 50° C bis 80° C aufgewärmt.

Eine besonders einfache Art und Weise der Harzbeschichtung besteht darin, die Einzelfilamente durch Tauchen in einem Bad des Harzes zu beschichten, wobei die Einzelfilamente vorzugsweise kontinuierlich durch das Bad gezogen werden. Hierdurch lässt sich ein sehr gleichmäßiger Harzauftrag erzielen und es entstehen nahezu keine Harzverluste durch Material, das bei alternativen Beschichtungsmethoden die Filamente eventuell nicht erreicht. Auch können die Volumina derartiger Bäder sehr klein gehalten werden, was bei einem Wechsel des Harzmaterials oder bei Stillstand von Vorteil ist.

Die Erfindung weiter ausgestaltend wird vorgeschlagen, für die Kompaktierung der Einzelfilamente mindestens eine Düse zu verwenden, durch die die Mehrzahl der beschichteten Einzelfilamente gezogen wird. Dabei sollte ein Innenraum der Düse kegelstumpfförmig sein, so dass beim Austritt der kompaktierten Einzelfilamente aus einem Öffnungsquerschnitt der Düse überschüssiges Harz im Innenraum der Düse zurückgehalten wird. Durch den sich auf die Austrittsöffnung verengenden Düsenquerschnitt wird im Zuge der Bewegung der Einzelfilamente ein Staudruck erzeugt, der zum einen ein gutes Ausfüllen des gesamten späteren Fadenquerschnitts mit Harz, insbesondere auch des Zentralbereichs ermöglicht und somit mögliche Gasbestandteile in dem späteren Fadenquerschnitt quasi vollständig entfernt. Vorzugsweise befinden sich die Düsen in einem Bad des Harzes.

In besonders vorteilhafter Weise lässt sich das anmeldungsgemäße Verfahren mit den nachfolgenden Filamenttypen durchführen:
a. Filamente aus synthetischen Polymeren, insbesondere aus Aramid, vorzugsweise aus Para-Aramid,
b. Filamente aus Kohlenstoff (Carbon),
c. Filamente aus Glas,
d. Filamente aus Mineralien, insbesondere aus Basalt
e. Filamente aus Metall (Draht), insbesondere aus Stahl.

Vorzugsweise sollten die Einzelfilamente einen Durchmesser im Bereich zwischen 3 µm und 30 µm, vorzugsweise zwischen 4 µm und 20 µm, weiter vorzugsweise zwischen 6 µm und 10 µm, besitzen und/oder der kompaktierte Verbund einen Durchmesser im Bereich zwischen 3 µm und 30 µm, vorzugsweise zwischen 4 µm und 20 µm, weiter vorzugsweise zwischen 6 µm und 10 µm besitzen und/oder der kompaktierte Verbund einen Durchmesser im Bereich zwischen 150 µm und 10 mm, vorzugsweise zwischen 200 µm und 2 mm, weiter vorzugsweise zwischen 250 µm und 1,0 mm besitzt und/oder der getrocknete monofile Faden eine Durchmesser im Bereich zwischen 120 µm und 10 mm, vorzugsweise zwischen 160 µm und 1,6 mm, weiter vorzugsweise zwischen 220 µm und 0,9 mm besitzen.

Ferner sollte der monofile Faden aus einer Anzahl von Einzelfilamenten aus den folgenden Intervallen zusammengesetzt ist: 100 bis 3000, vorzugsweise 150 bis 2000, weiter vorzugsweise 200 bis 1000.

Das verwendete Harz kann aus der Gruppe der folgenden Harztypen ausgewählt werden:
a) Phenol-Formaldehydharz,
b) Aminoplasthart,
c) Epoxydharz,
d) Polyesterharz,
e) ABS-Harz,
f) Silikonharz,
oder aus einer Mischung von mindestens zwei der vorgenannten Harztypen.

Gemäß einer Weiterbildung der Erfindung wird vorgeschlagen, dass das Harz einen Lösungsmittelanteil, vorzugsweise einen Wasseranteil, zwischen 10 % und 70 %, vorzugsweise zwischen 20 % und 50 %, weiter vorzugsweise zwischen 30 % und 40 % besitzt.

Gemäß einer besonders bevorzugten Ausgestaltung des erfindungsgemäßen Verfahrens kann das Lösungsmittel aus dem beschichteten und kompaktierten Verbund mittels Konvektion mit zwangsgeförderter Luft und/oder mittels elektromagnetischer Strahlung, insbesondere Infrarotstrahlung oder Mikrowellenstrahlung, ausgetrieben werden. Dabei sollte die Temperatur bei dem Trocknungsvorgang vorzugsweise im Bereich zwischen 70° C und 110° C, vorzugsweise zwischen 80° C und 100° C, gehalten werden, um eine ungewollte Vernetzung sicher auszuschließen.

Vorzugsweise werden die Einzelfilamente vor der Beschichtung auf eine Temperaturniveau zwischen 60°C und 70°C aufgewämt, um das Anhaften des Harzes an den Einzelfilamenten zu verbessern und das Einschleppen von Luft in das Harzbad zu reduzieren.

Um Fäden mit besonderen Eigenschaften zu erzielen und diese hinsichtlich mehrere Anforderungen zu optimieren, kann sich in einer Innenzone des kompaktierten Verbundes der Einzelfilamente ein erster Typ von Einzelfilamenten befinden, während sich in mindestens einer sich radial nach außen an die Innenzone anschließenden Außenzone ein anderer Typ von Einzelfilamenten befindet. Optional kann sich an einen solchen Fadentyp, der aus einer "Seele" und einem (ersten) "Mantel" besteht, weiter radial nach außen ein weiterer "Mantel" in Form einer zweiten Außenzone anschließen, in der ein anderer Typ von Einzelfilamenten als in der ersten Außenzone angeordnet ist. Auf diese Weise lassen sich Fäden mit optimalen Eigenschaften für unterschiedliche Anwendungen erzielen, z.B. für eine reine Festigkeitsoptimierung, eine Verschleißoptimierung, den Brandschutz, die Wärmeisolierung, die Schalldämmung o. ä.. Bei derartigen Fäden mit voneinander abgegrenzten Bereichen verschiedener Typen von Einzelfilamenten sollten die Grenzen zwischen den jeweiligen Zonen von Zylinderflächen gebildet werden, die koaxial zu einer Fadenlängsachse ausgerichtet sind.

Der Harzfluss während des Beschichtungsvorgangs wird verbessert und damit der Verbleib von Lufteinschlüssen in dem Harz-Einzelfilament-Verbund vermieden, wenn die Einzelfilamente vor der Beschichtung gereinigt, insbesondere in einem Bad einer Reinigungsflüssigkeit gewaschen und/oder mit einer dem Harzfluss fördernden Vorbeschichtung versehen werden, wobei die Einzelfilamente (45, 46, 47) während der Reinigung vorzugsweise vereinzelt geführt werden.

In vorrichtungstechnischer Hinsicht wird die zugrunde liegende Aufgabe durch eine Vorrichtung zur Herstellung eines Fadens, der eine Mehrzahl von Einzelfilamenten besitzt, gelöst, wobei die Vorrichtung die folgenden Merkmale aufweist:
- mindestens eine Zuführeinrichtung für die Mehrzahl der parallel zueinander ausgerichteten Einzelfilamente,
- eine Beschichtungseinrichtung, mit der die jeweils vorzugsweise in einem Abstand zueinander geführten Einzelfilamente an ihren Mantelflächen mit einem fließfähigen, ein Lösungsmittel enthaltenen und durch Einwirkung mindestens einer physikalischen Größe und/oder eines chemischen Stoffs vernetzbaren Harz beschichtbar sind,
- eine Kompaktierungseinrichtung, mit dem der von der Mehrzahl der Einzelfilamente und dem anhängenden Harz eingenommene Querschnitt so verkleinerbar ist, dass ein aus den Einzelfilamenten und dem diese zusammenhängend umgebenden Harz bestehender und von Gaseinschlüssen freier Verbund erzeugbar ist,
- eine Trocknungseinrichtung, mit der das in dem Harz enthaltene Lösungsmittel aus dem kompaktierten Verbund austreibbar ist und
- einer Wickeleinrichtung, mit der der getrocknete Verbund zugspannungsminimiert so aufwickelbar ist, dass die Einzelfilamente verdrehungsfrei angeordnet sind.
wobei vor der Beschichtungseinrichtung Mittel angeordnet sind, die die Einzelfilamente auf eine Temperatur von 50°C bis 80°C aufwärmen.

Mit einer derartigen Vorrichtung lässt sich das erfindungsgemäße Verfahren auf besonders einfache Weise durchführen.

Vorzugsweise umfasst die Beschichtungseinrichtung ein Behältnis mit einem Bad des Harzes, durch dass die Mehrzahl der Einzelfilamente vereinzelt führbar ist.

Um auf einfache Weise gute Kompaktierungsergebnisse zu erzielen, sollte die Kompaktierungseinrichtung mindestens eine Düse umfassen, deren Innenraum eine Kegelstumpfform besitzt. Vorzugsweise ist mindestens die Düse in dem Harzbad angeordnet.

Um Fäden mit mindestens zwei Zonen mit unterschiedlichen Typen von Einzelfilamenten herstellen zu können und somit Fäden mit kombinierten Eigenschaften zu erzeugen, wird vorgeschlagen, dass die Kompaktierungseinrichtung eine Innendüse und eine koaxial zu dieser angeordnete Außendüse aufweist. Zwischen einer Spitze der Innendüse und einer inneren Mantelfläche der einen kegelsturnpfförmigen Innenraum aufweisenden Außendüse befindet sich vorzugsweise ein Ringspalt. In diesem Fall ist somit durch einen Öffnungsquerschnitt der Innendüse eine Mehrzahl von Einzelfilamenten eines ersten Typs und durch den Ringspalt zwischen den Düsen eine Mehrzahl von Einzelfilamenten eines zweiten Typs führbar. Auf diese Weise kann an einem Austrittsquerschnitt der Außendüse ein kompaktierter Verbund erzeugt werden (Kombinationsverbund), der eine Innenzone aus Einzelfilamenten des ersten Typs und eine Außenzone aus Einzelfilamenten des zweiten Typs besitzt. Um einen guten Zusammenhalt der Einzelfilamente und später eine hohe Festigkeit des erzeugten Endprodukts zu gewährleisten, sind die Zwischenräume zwischen sämtlichen Einzelfilamenten beider Typen vollständig mit Harz ausgefüllt und sämtliche Einzelfilamente beider Typen verlaufen in dem Kombinationsverbund parallel zueinander.

Eine Feinabstimmung der Vorrichtung während des Kompaktierungsvorgangs kann die Außendüse in axiale Richtung zu der Innendüse verschiebbar und in unterschiedlichen Positionen feststellbar sein.

Erfindungsgemäß beträgt der bevorzugte Anteil des Harzes an dem gesamten Volumen des Faden zwischen 2 % und 15 %, weiter vorzugsweise zwischen 5 % und 12 %.

### Ausführungsbeispiel

Die Erfindung wird nachfolgend anhand eines Ausführungsbeispiels einer Vorrichtung zur Durchführung des Verfahrens sowie eines erfindungsgemäßen Fadens, näher erläutert.

Es zeigt:
- Fig. 1:: Einen Längsschnitt durch eine Vorrichtung,
- Fig. 2a bis 2c:: eine Draufsicht, eine Seitenansicht und eine Vorderansicht einer Kompaktierungseinrichtung der Vorrichtung gemäß Fig. 1,
- Fig. 3a und 3b:: zwei perspektivische Ansichten einer Außendüse mit eingesetzter Innendüse der Kompaktierungseinrichtung gemäß den Fig. 2a bis 2c,
- Fig. 4a und 4b:: jeweils eine Ansicht einer Außendüse sowie einer Innendüse der Kompaktierungseinrichtung gemäß den Fig. 2a bis 2c,
- Fig. 5:: einen Querschnitt durch einen Faden mit einer Innenzone und zwei Außenzonen,
- Fig. 6:: einen vergrößerten Ausschnitt aus Fig. 5 mit drei benachbarten Einzelfilamenten.

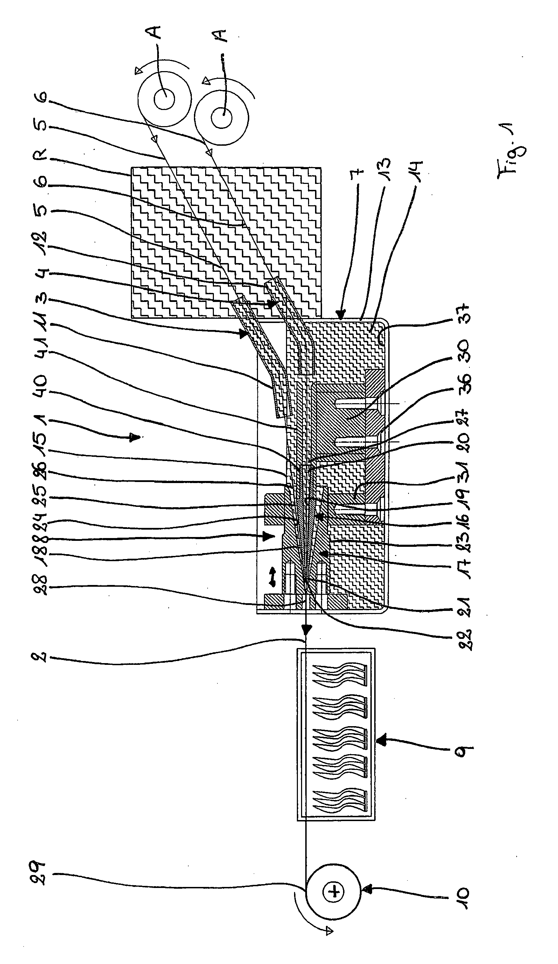

Eine in Figur 1 dargestellte Vorrichtung 1 zur Herstellung eines Fadens 2 weist als wesentliche Komponenten zwei Abwickeleinrichtungen A, zwei Zuführeinrichtungen 3 und 4 zur Zuführung jeweils einer Mehrzahl von nicht einzeln dargestellten, sondern nur durch die Linien 5 und 6 veranschaulichten Monofilamenten zweier unterschiedlicher Typen, eine Reinigungseinrichtung R, eine Beschichtungseinrichtung 7, eine Kompaktierungseinrichtung 8, eine lediglich schematisch dargestellte Trocknungseinrichtung 9 und schließlich noch eine Aufwickeleinrichtung 10 zum Aufwickeln des monofilen Fadens 2 auf.

Die Abwickeleinrichtungen ermöglichen ein verdrehungsfreies Abwickeln der Bündel von Einzelfilamenten, so dass insbesondere ein Über-Kopf-Abwickeln ausscheidet.

Bei den beiden Zuführeinrichtungen 3 und 4 handelt es sich um leicht gekrümmte Rohrkörper 11 und 12, durch die hindurch die Einzelfilamente, bei denen es sich um Monofilamente handelt, in vereinzelter Form hindurch geführt werden. Die Einzelfilamente werden von einer weiteren nicht dargestellten aber aus dem Stand der Technik bekannten Wickeleinrichtung jeweils verdrehungsfrei abgewickelt.

Zunächst werden beide Bündel von Monofilamenten durch ein Bad oder einen Vorhang einer Reinigungsflüssigkeit (Primer) einer Reinigungseinrichtung R geführt, bevor sie anschließend solchermaßen vorbehandelt zu der Beschichtungseinrichtung geleitet werden.

Die Beschichtungseinrichtung 7 wird gebildet von einem Behältnis 13, in dem sich ein Bad eines fließfähigen Harzes 14 befindet, durch das die jeweilige Mehrzahl der Einzelfilamente der beiden Typen hindurch laufen. Es findet somit eine Tauchbeschichtung sämtlicher Einzelfilamente statt. Über einen nicht dargestellten Anschluss wird ein Spiegel 15 des Harzbades konstant gehalten, insbesondere der fortlaufende Verbrauch des Harzes bei der Fadenbeschichtung ausgeglichen.

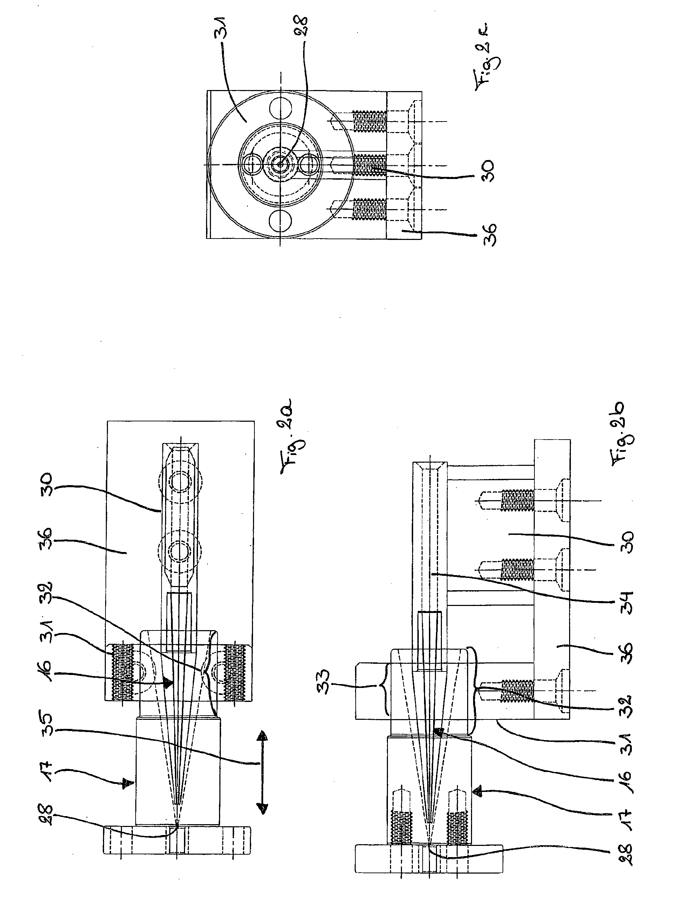

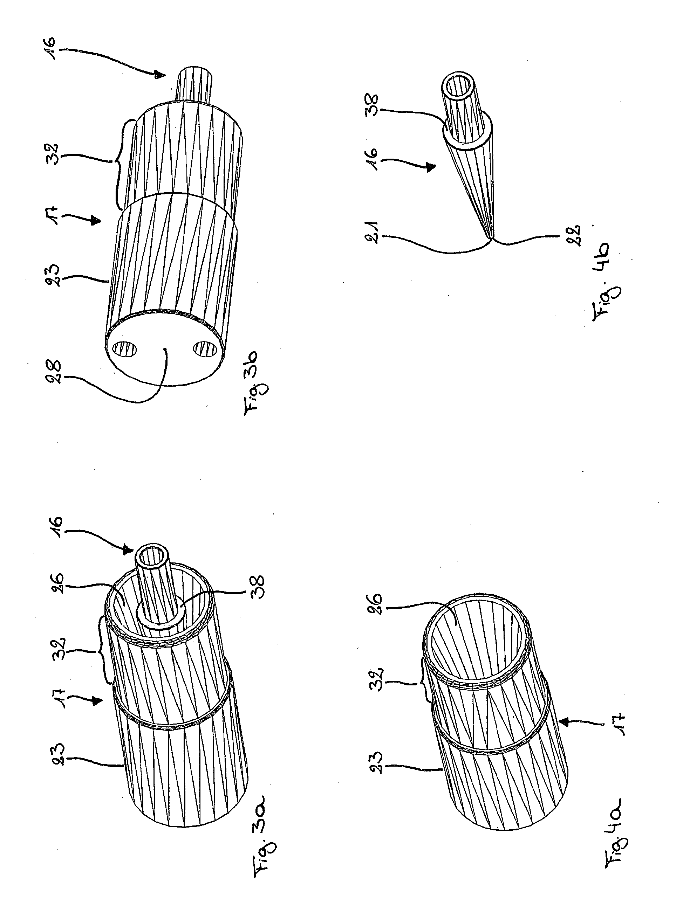

Die Kompaktierungseinrichtung 8, die in den Figuren 2a bis 2c in drei Ansichten separat abgebildet ist, besteht aus einer inneren Düse 16 und einer koaxial hierzu angeordneten äußeren Düse 17. Beide Düsen 16 und 17 sind in den Figuren 3a, 3b und 4a, 4b nochmals im Detail in verschiedenen perspektivischen Ansichten dargestellt.

Die innere Düse weist eine kegelstumpfförmige äußere Mantelfläche 18 und eine - einen kleineren Kegelwinkel aufweisende - innere Mantelfläche 19 auf. Die innere Mantelfläche 19 begrenzt einen Innenraum 20 der inneren Düse 16, wobei in dem Innenraum 20 bis hin zu einem an einer Spitze 21 der inneren Düse 16 angeordneten Öffnungsquerschnitt 22 die Kompaktierung, d.h. radiale Verdichtung, der Mehrzahl derjenigen Einzelfilamente stattfindet, die später eine Innenzone des Fadens 2 erzeugen.

Die äußere Düse 17 besitzt eine gestufte zylindrische äußere Mantelfläche 23 und eine kegelstumpfförmige innere Mantelfläche, deren Kegelwinkel wiederum größer ist als der Kegelwinkel der äußeren kegelstumpfförmigen Mantelfläche 18 der inneren Düse 16. Mit fortgesetzter Bewegung der Einzelfilament-Faserbündel beider Typen in die Innenräume 20, 25 der beiden Düsen 16, 17 verringert sich der jeweils wirksame Ring- bzw. Kreisquerschnitt beginnend von den jeweiligen Eintrittsquerschnitten 26, 27 der beiden Düsen 17, 16 kontinuierlich, wodurch die Kompaktierungswirkung auf die Einzelfilamente entsteht.

An einem Austrittsquerschnitt 28 der äußeren Düse 17 liegt am Ende des Kompaktierungsvorgangs ein monofiler Faden 2 vor, der in seinem Querschnitt eine relativ dichte Anordnung der Einzelfilamente aufweist, wobei die Zwischenräume zwischen den Einzelfilamenten vollständig mit Harz 14 ausgefüllt sind und keinerlei Gaseinschlüsse aufweisen.

Bedeutsam ist, dass die Einzelfilamente, die später die Außenzone des Fadens 2 bilden, zunächst als im Querschnitt ungefähr rundes oder später flaches, aufgelockertes Faserbündel durch den Rohrkörper 11 der Zuführeinrichtung 3 in die Vorrichtung 1 gelangen. Im Bereich des Ringraums zwischen der inneren Düse 16 und der äußeren Düse 17 kommt es - in axiale Richtung der Düsen 16, 17 betrachtet - zu einem Herumwickeln (Verteilen im Umfangsrichtung) der äußere Einzelfilamente um die äußere Mantelfläche 18 der inneren Düse 16. Im Ergebnis bilden die äußeren Einzelfilamente spätestens im Bereich des Öffnungsquerschnitts 22 der inneren Düse 16 einen - im Querschnitt betrachtet - geschlossenen Ring, der die im Querschnitt ungefähr kreisförmig angeordneten Einzelfilamente, die aus der inneren Düse 16 austreten und die spätere Innenzone des Fadens 2 bilden, vollständig umgibt.

Der äußere Kegelwinkel der inneren Düse 16 beträgt etwa 1,5° bis 2,5°, vorzugsweise 2,0° und der innere Kegelwinkel der inneren Düse 16 ca. 10° bis 15°, vorzugsweise ca. 12°. Der innere Kegelwinkel der äußeren Düse beträgt etwa 15° bis 20°, vorzugsweise ca. 18°.

In der Trocknungseinrichtung 9 wird der wie vorstehend erläutert gebildete monofile Faden 2 unter Anwendung von Mikrowellenstrahlung und/oder Heißluftkonvektion o. ä. getrocknet, d.h. das im vorliegenden Fall von Wasser gebildete Lösungsmittel des Harzes 14 wird aus letzterem entfernt, so dass die Viskosität ansteigt, die Klebeigenschaft und somit der Zusammenhalt der Einzelfilamente verbessert wird. Es findet jedoch lediglich eine Trocknung im physikalischen Sinne statt und keine chemische Vernetzung der Monomere des Harzes 14.

Nach Verlassen der Trocknungseinrichtung 9 ist der Faden 2 soweit stabilisiert und besitzt insofern keine "klebenden" Eigenschaften mehr, dass er auf der Wickeleinrichtung 10 auf entsprechenden Spulen 29 aufgewickelt werden kann. Wichtig bei dem erfindungsgemäßen Verfahren ist, dass die Einzelfilamente - im vorliegenden Fall beider Typen - an keiner Stelle des Herstellungsprozesses miteinander verdreht werden. Während des gesamten Herstellverfahrens wird die parallele, d.h. unidirektionale, Ausrichtung sämtlicher Einzelfilamente beibehalten, was auch für den auf der Spule 29 aufgewickelten "fertigen Faden 2 gilt.

Anhand der Figuren 1 sowie 2a bis 2c lässt sich erkennen, dass die innere Düse 16 an einem ersten Düsenträger 30 befestigt ist. Die äußere Düse 17 ist an einem zweiten Düsenträger 31 befestigt und zwar mit einem Außengewindeabschnitt 32 in einen damit zusammenwirkenden Innengewindeabschnitt 33 des Düsenträgers 31 eingeschraubt. Hierdurch kann im Zuge eines Verdrehens der äußeren Düse 17 um eine Achse 34 eine horizontale Verschiebung der äußeren Düse 17 entlang des Doppelpfeils 35 erreicht werden. Hierdurch können die Kompaktierungsparameter individuell eingestellt werden. Aus den Figuren lässt sich des Weiteren noch entnehmen, dass beide Düsenträger 30, 31 mit einer Grundplatte 36 verschraubt sind, wobei die Grundplatte 36 auf einer Bodenfläche 37 des Behältnisses 13 angeordnet ist. Die Düsen 16, 17, die Düsenträger 30, 31 und die Grundplatte 36 bestehen ebenso wie die zur Verbindung verwendeten Schrauben aus Edelstahl. Dasselbe gilt für das Behältnis 13 und die Rohrkörper 11 und 12 der Zuführeinrichtungen 3 und 4.

Wie sich noch aus den Figuren 3a und 3b sowie 4a und 4b entnehmen lässt, besitzt die innere Düse 16 im Anschluss an ihr kegelstumpfförmiges Vorderteil ein rohrförmiges Hinterteil, das an einer Stufe 38 an das Vorderteil anschließt. Mit dem Hinterteil, das einen Öffnungsquerschnitt 39 besitzt, lässt sich die innere Düse 16 einen entsprechend angepassten erweiterten Bohrungsabschnitt 40 eines rohrförmigen Düsenhalters 41 einsetzen, der wiederum mit dem Düsenträger 30 verbunden ist.

Mit Hilfe der Vorrichtung 1 lässt sich ein Faden 2 herstellen, dessen im Querschnitt kreisförmige Innenzone aus ungefähr 100 bis 2000 Einzelfilamenten aus Kohlenstoff (Carbon) besteht. Eine im Querschnitt ringförmige, um die Innenzone angeordnete Außenzone weist wiederum ca. 100 bis 2000 Einzelfilamente auf. Diese können beispielsweise aus Glas oder Keramik bestehen. Die Durchmesser beider Filamenttypen können zwischen ca. 5 µm und 25 µm, vorzugsweise zwischen ca. 8 µm und 20 µm betragen. Vorzugsweise besitzen die Einzelfilamente eines Typs alle denselben Durchmesser, auch können alle Filamenttypen denselben Durchmesser besitzen.

Das Harz 14 besteht im vorliegenden Fall aus einer Silikonharzmischung. Besonders geeignet ist das Silikonharz der Fa. Wacker Chemie AG, München, Deutschland, das unter der Bezeichnung "WS 40" vertrieben wird.

Die Vernetzung des Silikonharzes erfolgt zu einem späteren Zeitpunkt, wenn der fertige Faden 2 wieder von der Spule 29 abgespult und zu einem Halbfabrikat oder Endprodukt (textiles Flächengebilde oder dreidimensionale Struktur) verarbeitet ist und somit die endgültige Gestalt des Teils festliegt. Die Vernetzungstemperatur liegt oberhalb von 140° C, wobei vorzugsweise ein Druck von ca. bis zu 500 N/mm² aufgebracht wird. Die Weiterverarbeitung des unvernetzten Fadens 2 ist nicht Gegenstand der vorliegenden Anmeldung.

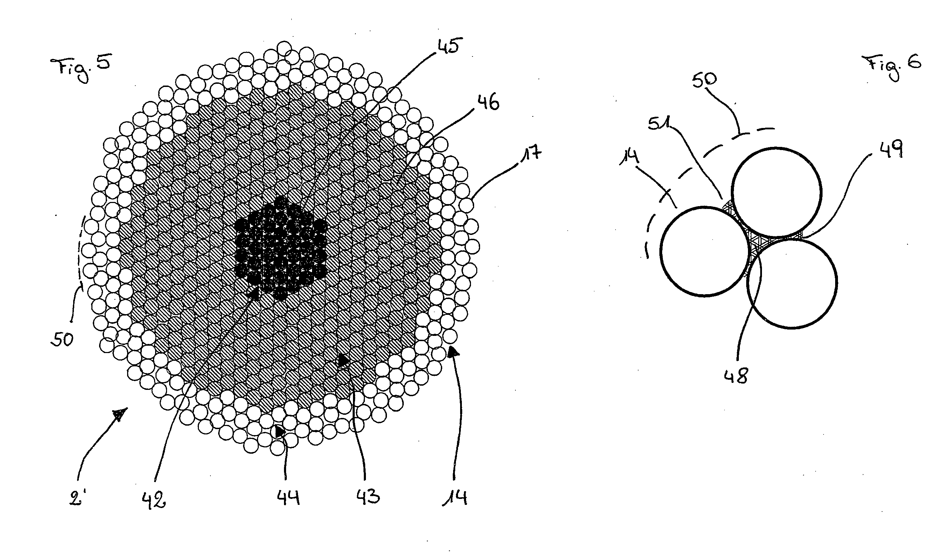

Der alternative Faden 2' gemäß Figur 5 weist gegenüber dem mit der Vorrichtung 1 hergestellten Faden 2 einen Drei-Zonen-Aufbau auf. Eine Innenzone 42 wird von einer im Querschnitt kreisringförmigen ersten Außenzone 43 umgeben, welche radial nach außen hin wiederum von einer im Querschnitt kreisringförmigen zweiten Außenzone 44 umschlossen wird. In dem in Figur 5 dargestellten Fall sind die Einzelfilamente 45 der Innenzone von Carbonfasern gebildet, die Einzelfilamente 46 der ersten Außenzone 43 aus Basalt und die Einzelfilamente 47 der zweiten Außenzone 44 aus Silikon. Es ist zu beachten, dass die Darstellung der Einzelfilamente 45 bis 47 in Bezug auf die vorliegende Anzahl in der jeweiligen Zone nicht maßstabgerecht ist. Wie bereits mit Bezug auf den Faden 2 als Produkt der Vorrichtung 1 ausgeführt, sind in der Innenzone 42 vorzugsweise mindestens ca. 100 Einzelfilamente vorhanden. In den beiden Außenzonen 43, 44 sind es typischerweise entsprechend mehr, d.h. zwischen ca. 500 und 1500, je nach den gewählten Schichtdicken.

Der Faden 2' zeichnet sich wie sämtliche nach dem erfindungsgemäßen Verfahren hergestellte Fäden durch eine sehr hohe Packungsdichte der Einzelfilamente 45 bis 47 in sämtlichen drei Zonen aus. Zwischenräume 48, die in Figur 6 an drei exemplarisch herausgegriffenen Einzelfilamenten 47 veranschaulicht sind, besitzen im Querschnitt eine typische Zwickelform (Dreieck mit gekrümmten Seiten). In der Praxis befinden sich auch im Bereich von scheinbaren Kontaktlinien 49 oder Kontaktflächen dünne Zwischenschichten aus Harz, wodurch die Festigkeit des Verbundes aus Einzelfilamenten 47 und Harz zum späteren Vernetzen des Harzes verbessert wird. Bei Einzelfilamenten 47, die den Faden 2' nach außen hin begrenzen, befindet sich Harz 14 auch in einem durch die gestrichelte Linie 50 begrenzten Bereich um die Einzelfilamente 47 herum und auch in den zwischen benachbarten Einzelfilamenten 47 gebildeten Zwickeln 51. Insgesamt ist der Harzverbrauch bei dem erfindungsgemäßen Verfahren bzw. Faden 2 und 2' minimiert.

Aramid-, insbesondere Para-Aramid-Monofilament, wird aufgrund des hohen Preises insbesondere dann verwendet, wenn die Festigkeitseigenschaften bzw. das Verhältnis von Festigkeit und Masse wichtig ist (Luft- und Raumfahrt, Sicherheitstechnik etc). Glasfaser ist ein kostengünstiges Material mit zufrieden stellenden Eigenschaften. Bei hohen Anforderungen an die Temperaturfestigkeit können Keramik - oder Basaltfasern verwendet werden. Abriebfeste Monofilamente werden meist in der Außenzone, solche mit hoher Zugfestigkeit meist in der Innenzone eingesetzt.

### Bezugszeichenliste

- 1: Vorrichtung
- 2, 2': Faden
- 3: Zuführeinrichtung
- 4: Zuführeinrichtung
- 5: Linie
- 6: Linie
- 7: Beschichtungseinrichtung
- 8: Kompaktierungseinrichtung
- 9: Trocknungseinrichtung
- 10: Wickeleinrichtung
- 11: Rohrkörper
- 12: Rohrkörper
- 13: Behältnis
- 14: Harz
- 15: Spiegel
- 16: innere Düse
- 17: äußere Düse
- 18: äußere Mantelfläche
- 19: innere Mantelfläche
- 20: Innenraum
- 21: Spitze
- 22: Öffnungsquerschnitt
- 23: äußere Mantelfläche
- 24: innere Mantelfläche
- 25: Innenraum
- 26: Eintrittsquerschnitt
- 27: Eintrittsquerschnitt
- 28: Austrittsquerschnitt
- 29: Spule
- 30: Düsenträger
- 31: Düsenträger
- 32: Außengewindeabschnitt
- 33: Innengewindeabschnitt
- 34: Achse
- 35: Doppelpfeil
- 36: Grundplatte
- 37: Bodenfläche
- 38: Stufe
- 39: Öffnungsquerschnitt
- 40: Bohrungsabschnitt
- 41: Düsenhalter
- 42: Innenzone
- 43: erste Außenzone
- 44: zweite Außenzone
- 45: Einzelfilament
- 46: Einzelfilament
- 47: Einzelfilament
- 48: Zwischenraum
- 49: Kontaktlinie
- 50: Linie
- 51: Zwickel
- R: Reinigungseinrichtung

## Patentansprüche

1. Verfahren zur Herstellung eines Fadens (2, 2'), der eine Mehrzahl von Einzelfilamenten (45, 46, 47) besitzt, die mit einem fließfähigen, ein Lösungsmittel enthaltenden und durch Einwirkung mindestens einer physikalischen Größe und/oder eines chemischen Stoffs vernetzbaren Harz (14) beschichtet werden, wobei die beschichteten Einzelfilamente (45, 46, 47) anschließend kompaktiert werden, sodass ein aus den Einzelfilamenten (45, 46, 47) und dem diese zusammenhängend umgebenden Harz (14) bestehender und von Gaseinschlüssen freier Verbund gebildet wird, aus dem im Folgenden während eines Trocknungsvorgangs das in dem Harz (14) enthaltene Lösungsmittel ausgetrieben wird, wobei der als monofiler Faden (2, 2') vorliegende Verbund in einem unvernetzten Zustand des Harzes (14) aufgewickelt wird und alle Einzelfilamente während sämtlicher vorstehender Verfahrensschritte in paralleler Ausrichtung gehalten werden, **dadurch gekennzeichnet, dass** die Einzelfilamente (45, 46, 47) vor der Beschichtung mit dem Harz (14) auf eine Temperatur von 50°C bis 80°C aufgewärmt werden, wobei die Einzelfilamente (45, 46, 47) durch Tauchen in einem Bad des Harzes (14) beschichtet werden.

2. Verfahren nach Anspruch 1, **dadurch gekennzeichnet, dass** die Einzelfilamente (45, 46, 47) kontinuierlich durch das Bad gezogen werden.

3. Verfahren nach Anspruch 1 oder 2, **dadurch gekennzeichnet, dass** die Kompaktierung in einer Düse (16, 17) erfolgt, durch die die Mehrzahl der beschichteten Einzelfilamente (45, 46, 47) gezogen wird, wobei ein Innenraum (20, 25) der Düse (16, 17) kegelstumpfförmig ist, so dass beim Austritt der kompaktierten Einzelfilamente (45, 46, 47) aus einem Öffnungsquerschnitt der Düse (16, 17) überschüssiges Harz (14) im Innenraum (20, 25) der Düse (16, 17) zurückgehalten wird.

4. Verfahren nach einem der Ansprüche 1 bis 3, **dadurch gekennzeichnet, dass** die Einzelfilamente (45, 46, 47) mindestens eine der nachfolgenden Filamenttypen umfassen:
a) Filamente aus synthetischen Polymeren, insbesondere aus Aramid, vorzugsweise aus Para-Aramid,
b) Filamente aus Kohlenstoff (Carbon),
c) Filamente aus Glas,
d) Filamente aus Mineralien, insbesondere aus Basalt,
e) Filamente aus Metall (Draht), insbesondere aus Stahl.

5. Verfahren nach einem der Ansprüche 1 bis 4, **dadurch gekennzeichnet, dass** die Einzelfilamente (45, 46, 47) einen Durchmesser im Bereich zwischen 3 µm und 30 µm, vorzugsweise zwischen 4 µm und 20 µm, weiter vorzugsweise zwischen 6 µm und 10 µm besitzen und/oder der kompaktierte Verbund einen Durchmesser im Bereich zwischen 150 µm und 10 mm, vorzugsweise zwischen 200 µm und 2 mm, weiter vorzugsweise zwischen 250 µm und 1,0 mm besitzt und/oder der getrocknete monofile Faden eine Durchmesser im Bereich zwischen 120 µm und 10 mm, vorzugsweise zwischen 160 µm und 1,6 mm, weiter vorzugsweise zwischen 220 µm und 0,9 mm besitzt.

6. Verfahren nach einem der Ansprüche 1 bis 5, **dadurch gekennzeichnet, dass** der monofile Faden aus einer Anzahl von Einzelfilamenten aus den folgenden Intervallen zusammengesetzt ist: 100 bis 3000, vorzugsweise 150 bis 2000, weiter vorzugsweise 200 bis 1000.

7. Verfahren nach einem der Ansprüche 1 bis 6, **dadurch gekennzeichnet, dass** das Harz (14) aus der Gruppe der folgenden Harztypen ausgewählt ist:
a) Phenol-Formaldehydharz,
b) Aminoplasthart,
c) Epoxydharz,
d) Polyesterharz,
e) ABS-Harz,
f) Silikonharz,
oder aus einer Mischung von mindestens zwei der vorgenannten Harztypen besteht.

8. Verfahren nach einem der Ansprüche 1 bis 7, **dadurch gekennzeichnet, dass** das Harz (14) vor der Trocknung einen Lösungsmittelanteil, vorzugsweise einen Wasseranteil, zwischen 10 % und 70 %, vorzugsweise zwischen 20 % und 50 %, weiter vorzugsweise zwischen 30 % und 40 % besitzt.

9. Verfahren nach einem der Ansprüche 1 bis 8, **dadurch gekennzeichnet, dass** das Lösungsmittel aus dem beschichteten und kompaktierten Verbund mittels Konvektion mit zwangsgeförderter Luft und/oder mittels elektromagnetischer Strahlung, insbesondere Infrarotstrahlung und/oder Mikrowellenstrahlung, ausgetrieben wird, wobei die Temperatur bei dem Trocknungsvorgang vorzugsweise im Bereich zwischen 70°C und 110°C, vorzugsweise zwischen 80°C und 100°C, gehalten wird.

10. Verfahren nach einem der Ansprüche 1 bis 9, **dadurch gekennzeichnet, dass** die Einzelfilamente (45, 46, 47) vor der Beschichtung mit dem Harz (14) auf eine Temperatur zwischen 60°C und 70°C, aufgewärmt werden.

11. Vorrichtung (1) zur Herstellung eines Fadens (2), der eine Mehrzahl von Einzelfilamenten besitzt, mit
- mindestens einer Zuführeinrichtung (3, 4) für die Mehrzahl der parallel zueinander ausgerichteten Einzelfilamente (45, 46, 47),
- einer Beschichtungseinrichtung (7), mit der die Einzelfilamente jeweils an ihren Mantelflächen mit einem fließfähigen, ein Lösungsmittel enthaltenen und durch Einwirkung mindestens einer physikalischen Größe und/oder eines chemischen Stoffs vernetzbaren Harz (14) beschichtbar sind,
- einer Kompaktierungseinrichtung (8), mit der der von der Mehrzahl der Einzelfilamente und dem anhängenden Harz (14) eingenommene Querschnitt so verkleinerbar ist, dass ein aus den Einzelfilamenten und dem diese zusammenhängend umgebenden Harz (14) bestehender und von Gaseinschlüssen freier Verbund erzeugbar ist,
- einer Trocknungseinrichtung (9), mit der das in dem Harz (14) enthaltene Lösungsmittel aus dem kompaktierten Verbund austreibbar ist,
- einer Wickeleinrichtung(10), mit der der getrocknete Verbund zugspannungsminimiert so aufwickelbar ist, dass die Einzelfilamente verdrehungsfrei angeordnet sind und
- einem Mittel, um vor der Beschichtungseinrichtung (7) die Einzelfilamente (45, 46, 47) auf eine Temperatur von 50°C bis 80°C aufzuwärmen,
**dadurch gekennzeichnet, dass**
- die Beschichtungseinrichtung (7) ein Behältnis (13) mit einem Bad des Harzes (14) ist, durch das die Mehrzahl der Einzelfilamente vereinzelt führbar ist.

12. Vorrichtung nach Anspruch 11, **dadurch gekennzeichnet, dass** die Kompaktierungseinrichtung (8) mindestens eine Düse (16, 17) aufweist, deren Innenraum (20, 25) eine Kegelstumpfform besitzt.

## Claims

1. Method for producing a thread (2, 2') which has a plurality of individual filaments (45, 46, 47) which are coated with a flowable resin (14) containing a solvent and which can be cross-linked by the action of at least one physical variable and/or a chemical substance, wherein the coated individual filaments (45, 46, 47) are then compacted so that a composite consisting of the individual filaments (45, 46, 47) and the resin (14) surrounding these in a cohesive manner, and being free from gas inclusions is formed from which the solvent contained in the resin (14) is expelled subsequently during a drying process, wherein the composite present as a monofilament thread (2, 2') is wound in a non-cross-linked state of the resin (14) and all the individual filaments are held in parallel alignment during all the preceding process steps, **characterised in that** the individual filaments (45, 46, 47) are heated to a temperature of 50°C to 80°C before the coating with the resin (14), wherein the individual filaments (45, 46, 47) are coated by dipping in a bath of the resin (14).

2. The method according to claim 1, **characterised in that** the individual filaments (45, 46, 47) are drawn continuously through the bath.

3. The method according to claim 1 or 2, **characterised in that** the compacting is performed in a nozzle (16, 17) through which the plurality of coated individual filaments (45, 46, 47) is drawn, wherein an interior space (20, 25) of the nozzle (16, 17) is frustroconical so that excess resin (14) is retained in the interior space (20, 25) of the nozzle (16, 17) upon exit of the compacted individual filaments (45, 46, 47) from an opening cross-section of the nozzle (16, 17).

4. The method according to any one of claims 1 to 3, **characterised in that** the individual filaments (45, 46, 47) at least comprise one of the following filament types:
a) filaments made of synthetic polymers, in particular of aramid, preferably of para-aramid,
b) filaments made of carbon,
c) filaments made of glass,
d) filaments made of minerals, in particular of basalt,
e) filaments made of metal (wire), in particular of steel.

5. The method according to any one of claims 1 to 4, **characterised in that** the individual filaments (45, 46, 47) have a diameter in the range between 3 µm and 30 µm, preferably between 4 µm and 20 µm, further preferably between 6 µm and 10 µm and/or the compacted composite has a diameter in the range between 150 µm and 10 mm, preferably between 200 µm and 2 mm, further preferably between 250 µm and 1.0 mm and/or the dried monofilament thread has a diameter in the range between 120 µm and 10 mm, preferably between 160 µm and 1.6 mm, further preferably between 220 µm and 0.9 mm.

6. The method according to any one of claims 1 to 5, **characterised in that** the monofilament thread is assembled from a number of individual filaments from the following ranges: 100 to 3000, preferably 150 to 2000, further preferably 200 to 1000.

7. The method according to any one of claims 1 to 6, **characterised in that** the resin (14) is selected from the group of the following types of resins:
a) phenol formaldehyde resin,
b) amino plastic resin,
c) epoxy resin,
d) polyester resin,
e) ABS resin,
f) silicone resin
or consists of a mixture of at least two of the aforesaid types of resin.

8. The method according to any one of claims 1 to 7, **characterised in that** the resin (14) before drying has a solvent fraction, preferably a water fraction between 10% and 70%, preferably between 20% and 50%, further preferably between 30% and 40%.

9. The method according to any one of claims 1 to 8, **characterised in that** the solvent is driven out of the coated and compacted composite by means of convection with forcibly conveyed air and/or by means of electromagnetic radiation, in particular infrared radiation and/or microwave radiation, wherein the temperature during the drying process is preferably maintained in the range between 70°C and 110°C, preferably between 80°C and 100°C.

10. The method according to any one of claims 1 to 9, **characterised in that** the individual filaments (45, 46, 47) are heated to a temperature between 50°C and 80°C before being coated with the resin (14).

11. A device (1) for producing a thread (2) which has a plurality of individual filaments, comprising:
- at least one feed device (3, 4) for the plurality of individual filaments (45, 46, 47) aligned parallel to one another,
- a coating device (7) by which means the individual filaments can each be coated on their lateral surfaces with a flowable resin (14) which contains a solvent and which can be cross-linked by the action of at least one physical variable and/or one chemical substance,
- a compacting device (8) by which means the cross-section filled by the plurality of individual filaments and the adhering resin (14) can be reduced so that a composite consisting of the individual filaments and the resin cohesively surrounding them, and which is free from gas inclusions can be produced,
- a drying device (9) by which means the solvent contained in the resin (14) can be expelled from the compacted composite,
- a winding device (10) by which means the dried composite can be wound with minimum tensile stress so that the individual filaments are arranged free from twist and
- a means to heat the individual filaments (45, 46, 47) to a temperature of 50°C to 80°C before the coating device (7)
**characterised in that**
- the coating device (7) is a container (13) with a bath of the resin (14) through which the plurality of individual filaments can be guided separately.

12. The device according to claim 11, **characterised in that** the compacting device (8) has at least one nozzle (16, 17) whose interior space (20, 25) has a truncated cone shape.

## Revendications

1. Procédé de fabrication d'un fil (2, 2') qui possède une pluralité de filaments distincts (45, 46, 47) qui sont enrobés d'une résine (14) fluide, contenant un solvant et pouvant être réticulée par l'action d'au moins un paramètre physique et/ou un produit chimique, les filaments enrobés distincts (45, 46,, 47) étant ensuite compactés de manière à constituer un composite formé des filaments distincts (45, 46, 47) et de la résine (14) y adhérant et exempt d'inclusions gazeuses, composite duquel, pendant un processus de séchage, le solvant contenu dans la résine (14) est expulsé, le composite présent sous forme de fil monofilament (2, 2') étant ensuite enroulé en état non réticulé de la résine (14) et tous les filaments distincts étant maintenus en orientation parallèle pendant toutes les étapes opératoires précédentes, **caractérisé en ce que** les filaments distincts (45, 46, 47) sont chauffés avant enrobage avec la résine (14) à une température de 50 °C à 80 °C, les filaments distincts (45, 46, 47) étant enrobés en les plongeant dans un bain de résine (14).

2. Procédé selon la revendication 1, **caractérisé en ce que** les filaments distincts (45, 46, 47) sont tirés en continu dans le bain.

3. Procédé selon la revendication 1 ou 2, **caractérisé en ce que** le compactage se fait dans une buse (16, 17) à travers laquelle la pluralité d'éléments enrobés (45, 46, 47) sont tirés, un espace intérieur (20, 25) de la buse (16, 17) étant en forme de tronc conique, de sorte que, à la sortie des filaments distincts (45, 46, 47) compactés d'une section d'ouverture de la buse (16, 17), la résine excédentaire (14) est retenue dans l'espace intérieur (20, 25) de la buse (16, 17).

4. Procédé selon une des revendications 1 à 3, **caractérisé en ce que** les filaments distincts (45, 46, 47) comprennent au moins un des types de filaments suivants :
a) filaments de polymères synthétiques, en particulier d'aramide, de préférence de para-aramide,
b) filaments de carbone,
c) filaments de verre,
d) filaments de minéraux, en particulier de basalte,
e) filaments de métal (fil), en particulier d'acier.

5. Procédé selon une des revendications 1 à 4, **caractérisé en ce que** les filaments distincts (45, 46, 47) ont un diamètre de l'ordre de 3 µm à 30 µm, de préférence de 4 µ à 20 µm, plus préférentiellement de 6 µm à 10 µm et/ou que le composite compacté a un diamètre de l'ordre de 150 µm à 10 mm, de préférence de 200 µm à 2 mm, plus préférentiellement de 250 µm à 1,0 mm et/ou que le fil monofilament séché a un diamètre de l'ordre de 120 µm à 10 mm, de préférence de 160 µm à 1,6 mm, plus préférentiellement de 200 µm à 0,9 mm.

6. Procédé selon une des revendications 1 à 5, **caractérisé en ce que** le fil monofilament est composé d'un certain nombre de filaments distincts des intervalles suivants : 100 à 3000, de préférence 150 à 2000, plus préférentiellement de 200 à 1000.

7. Procédé selon une des revendications 1 à 6, **caractérisé en ce que** la résine (14) est sélectionnée dans le groupe des types de résines suivants :
a) résine de phénol-formaldéhyde,
b) résine d'aminoplaste,
c) résine époxyde,
d) résine de polyester,
e) résine d'ABS,
f) résine de silicone
ou d'un mélange d'au moins deux des types de résines précités.

8. Procédé selon une des revendications 1 à 7, **caractérisé en ce que** la résine (14) présente, après séchage, une proportion de solvant, de préférence une proportion d'eau, comprise entre 10 % et 70 %, de préférence entre 20 % et 50 %, plus préférentiellement entre 30 % et 40 %.

9. Procédé selon une des revendications 1 à 8, **caractérisé en ce que** le solvant est expulsé du composite enrobé et compacté par convection avec de l'air apporté de force et/ou par rayonnement électromagnétique, en particulier rayonnement infrarouge et/ou rayonnement infrarouge et rayonnement de micro-ondes, la température étant maintenue lors du processus de séchage de préférence dans la plage de 70 °C à 110 °C, de préférence de 80 °C à 100 °C.

10. Procédé selon une des revendications 1 à 9, **caractérisé en ce que** les filaments distincts (45, 46, 47), avant enrobage avec la résine (14), sont chauffés à une température de 60 °C à 70 °C.

11. Dispositif (1) de fabrication d'un fil (2) qui possède une pluralité de filaments distincts, comprenant
- au moins un dispositif d'acheminement (3, 4) pour la pluralité de filaments distincts (45, 46, 47) orientés parallèlement les uns aux autres,
- un dispositif d'enrobage (7) à l'aide duquel les filaments distincts peuvent être enrobés au niveau de leurs surfaces d'enveloppe d'une résine fluide (14) contenant un solvant et pouvant être réticulée par l'action d'au moins un paramètre physique et/ou d'un produit chimique,
- un dispositif de compactage (8) qui permet de réduire la section transversale occupée par la pluralité de filaments distincts et la résine (14) y adhérant de manière à pouvoir créer un composite formé des filaments distincts et de la résine (14) qui les entoure et exempt d'inclusions gazeuses,
- un dispositif de séchage (9) qui permet d'expulser le solvant contenu dans la résine (14) du composite compacté,
- un dispositif d'enroulement (10) qui permet d'enrouler le composite séché en minimisant les tensions de manière à ce que les filaments distincts soient disposés sans torsion et
- un moyen pour chauffer les filaments distincts (45, 46, 47) à une température de 50 °C à 80 °C en amont du dispositif d'enrobage (7),
**caractérisé en ce que**
- le dispositif d'enrobage (7) est un réceptacle (13) contenant un bain de résine (14) dans lequel la pluralité de filaments distincts peuvent être conduits individuellement.

12. Dispositif selon la revendication 11, **caractérisé en ce que** le dispositif de compactage. (8) présente au moins une buse (16, 17) dont l'espace intérieur (20, 25) a une forme de tronc conique.
